**Europäisches Patentamt**

**European Patent Office**

**Office européen des brevets**

(11) Veröffentlichungsnummer: **0 184 105**
**A2**

(12) **EUROPÄISCHE PATENTANMELDUNG**

(21) Anmeldenummer: **85114946.8**

(22) Anmeldetag: **26.11.85**

(51) Int. Cl.⁴: **A 23 L 1/23**
**A 23 C 19/068, A 23 C 19/0-32**

(30) Priorität: **05.12.84 DE 3444282**

(43) Veröffentlichungstag der Anmeldung:
**11.06.86 Patentblatt 86/24**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Deger, Hans-Matthias, Dr.**
**Am Rheingauer Weg 8**
**D-6238 Hofheim am Taunus(DE)**

(72) Erfinder: **Kachholz, Traudel, Dr.**
**Am Burgenblick 2**
**D-6240 Königstein/Taunus(DE)**

(72) Erfinder: **Mixich, Johann, Dr.**
**An der Ziegelei 14**
**D-6233 Kelkheim (Taunus)(DE)**

(72) Erfinder: **Präve, Paul, Prof. Dr.**
**Kronberger Weg 7**
**D-6231 Sulzbach (Taunus)(DE)**

(72) Erfinder: **Schlingmann, Merten, Dr.**
**Schneidhainerstrasse 32 a**
**D-6240 Königstein/Taunus(DE)**

(72) Erfinder: **Bauer, Dieter, Dr.**
**Gesslerstrasse 18**
**D-4600 Dortmund(DE)**

(72) Erfinder: **Justinski, Uwe**
**Kirchstrasse 53**
**D-5840 Schwerte 4(DE)**

(54) Käsearoma.

(57) Durch Beimpfen von Milch mit einer Hefe der Gattung Torulopsis und Penicillium roqueforti erhält man nach wenigen Tagen ein Käsearomakonzentrat, das etwa 4 bis 5 mal konzentrierter ist als herkömmlich gereifter Roquefortkäse. Bevorzugt ist eine Hefe der Art T. etchelsii. Ein Zusatz von Sahne und/oder Lipase führt zu einer Ausbeutesteigerung.

EP 0 184 105 A2

## Käsearoma

Der Absatz von Schimmelkäsen, insbesondere von "blue cheese", steigt in der Bundesrepublik Deutschland in den letzten Jahren ständig an. Ein großer Teil dieses Käses wird direkt verbraucht, ein nicht zu vernachlässigender Anteil dieser schimmelgereiften Käse dient aber auch als geschmacksgebende Komponente bei Salatsoßen, Mayonnaisen, Snacks und Backwaren.

Kommerziell werden Blauschimmelkäse aus roher oder aus pasteurisierter und homogenisierter Milch durch Beimpfung mit Penicillium roqueforti hergestellt. Der optimale Geschmack entwickelt sich nach 3 bis 6 Monaten Reifung bei hoher Luftfeuchtigkeit und einer Temperatur von 8°C unter ständiger Kontrolle. Dieses Verfahren ist also außerordentlich aufwendig und die Raum-Zeit-Ausbeute des Aromas gering. Es wurde schon vielfach versucht, diese Reifung zu beschleunigen, wobei aber noch kein entscheidender Durchbruch erzielt wurde. Als Stand der Technik sind die folgenden Veröffentlichungen bekannt geworden:

FR- 20 47 614
FR- 14 56 214
GB- 10 57 170
US- 41 33 895
US- 39 73 042
US- 36 67 968
J. of Food Science, 1975, S.285-287;
J. of Food Science, 1974, S.620-622

Es wurde nun gefunden, daß man in kurzer Zeit ein "blue cheese"-Aromakonzentrat gewinnen kann, das in den vorstehend genannten Anwendungsgebieten eingesetzt werden kann. Erfindungsgemäß wird Milch mit einer Hefe der Gattung Torulopsis und P. roqueforti fermentiert. Hierbei wird zweckmäßig die Milch zuerst mit der Hefe beimpft, nach der Bruchbildung die Molke entfernt und der Bruch mit
Penicillium roqueforti beimpft. Man kann jedoch die Milch
auch gleichzeitig mit beiden Mikroorganismen beimpfen.
Schon nach 3 bis 4 Tagen erhält man ein Käsearoma, das 4
bis 5 mal so konzentriert ist wie in herkömmlich gereiftem
Roquefort.

Im folgenden werden bevorzugte Ausgestaltungen der Erfindung näher erläutert:

Als Hefe der Gattung Torulopsis haben sich besonders die
Art T. etchelsii und Torulopsisarten mit vergleichbaren
Eigenschaften bewährt wie T. holmii, T. humilis, T. multisgeminis, T. nagoyaensis, T. novarrensis, T. nemodendra,
T. torresii, T. vanderwaltii, T. versatilis und T. wickerhamii.

Die Fermentation findet zweckmäßig in einem Temperaturbereich von +10 bis 20°C, vorteilhaft von 15 bis 18°C, statt.

Zusätze von

a) Sahne bis zu etwa 45 %, bezogen auf das Milchgewicht,
   vorzugsweise bis 25 %, was einen Fettgehalt von 1,5
   bis 8 %, vorzugsweise 3,5 bis 6 % ergibt, und/oder

b) Lipase ergeben eine höhere Konzentration an Käsearoma.
   Die Menge der Lipase richtet sich nach deren Aktivität
   und dem Fettgehalt des Substrats, also insbesondere
   nach einem eventuellen Zusatz von Sahne, und kann
   durch einfache Vorversuche leicht ermittelt werden.
   Zweckmäßig ist bei einem Sahnezusatz von bis zu 25 %
   eine Menge von 0,5 bis 25 mg, vorzugsweise 5 bis 20 mg,
   Lipase pro kg Milch bzw. Milch-Sahne-Mischung.

Die Impfmenge an Hefe und P. roqueforti richtet sich nach
der Aktivität des verfügbaren Stammes, die in einfachen
Vorversuchen leicht zu ermitteln ist. Diese Impfmengen können in gewissen Bereichen schwanken, wobei höhere Konzentrationen zu einer Beschleunigung des Verfahrens beitragen können.

In den folgenden Beispielen wird die Erfindung näher erläutert. Die für die Impfmengen angegebenen Bereiche sind Erfahrungswerte mit handelsüblichen bzw. allgemein zugänglichen Stämmen. Prozentangaben beziehen sich auf das Gewicht.

Beispiel 1

8 l Milch werden mit 20 bis 50 mg T. etchelsii beimpft und bis zur Bruchbildung ruhen gelassen. Nach Abtrennung des Bruches von der Molke werden 50 bis 80 mg Sporen von P. roqueforti zugesetzt und 3 bis 4 Tage bei 20°C gehalten.

Eine semiquantitative sensorische Prüfung mit Hilfe von Verdünnungsreihen im Vergleich mit Roquefortkäse ergab, daß das Aroma des erfindungsgemäßen Produktes etwa 4 mal so stark ist.

Beispiel 2

Verfährt man wie im Beispiel 1, setzt jedoch der Milch 25 % Sahne (6 % Fettgehalt, bezogen auf die Milch-Sahne-Mischung) zu, so erhält man unter den gleichen Bedingungen ein Aromakonzentrat, das etwa 4 bis 5 mal so konzentriert ist wie Roquefortkäse.

Beispiel 3

Verfährt man gemäß Beispiel 2, setzt jedoch 20 mg Lipase zu, so erhält man nach 3 Tagen ein Aromakonzentrat, das etwa 5 mal so konzentriert ist wie Roquefortkäse.

### Beispiel 4

Verfährt man nach Beispiel 2, läßt das Aromakonzentrat jedoch bei 18°C reifen, so erhält man nach 4 Tagen ein Aromakonzentrat, das 4 bis 5 mal so konzentriert ist wie Roquefortkäse.

### Beispiel 5

8 1 Milch werden mit 20 bis 50 mg T. etchelsii und 50 bis 80 mg P. roqueforti beimpft und bis zur Bruchbildung ruhen gelassen. Nach Abtrennung des Käsebruchs von der Molke hält man die Temperatur 3 Tage bei 20°C. Man erhält ein Aromakonzentrat, das etwa 4 mal so konzentriert ist wie Roquefortkäse.

### Beispiel 6

Verfährt man gemäß Beispiel 5, setzt jedoch der Milch 25 % Sahne (6 % Fettgehalt, bezogen auf die Milch-Sahne-Mischung) zu, so erhält man nach einer Reifungszeit von 3 bis 4 Tagen bei 20°C ein Aromakonzentrat, das etwa 4 bis 5 mal so konzentriert ist wie Roquefortkäse.

### Beispiel 7

Verfährt man gemäß Beispiel 6, läßt jedoch bei 18°C 4 Tage reifen, so erhält man das gleiche Ergebnis.

### Beispiel 8

Verfährt man gemäß Beispiel 6, setzt der Mischung jedoch noch 20 mg Lipase zu, so erhält man ein Aromakonzentrat, das etwa 5 mal so konzentriert ist wie Roquefortkäse.

### Beispiel 9

Das gleiche Ergebnis wie bei Beispiel 8 erhält man nach einer Reifungsdauer von 4 Tagen bei 18°C.

HOE 84/F 288

0184105

Patentansprüche:

1. Verfahren zur Herstellung eines Käsearomas, dadurch gekennzeichnet, daß man Milch mit einer Hefe der Gattung Torulopsis und Penicillium roqueforti fermentiert.

2. Verfahren nach Anspruch 1, dadurch gekennzeichnet, daß man als Hefe T. etchelsii einsetzt.

3. Verfahren nach Anspruch 1 oder 2, dadurch gekennzeichnet, daß man P. roqueforti dem abgetrennten Käsebruch zusetzt.

4. Verfahren nach einem oder mehreren der vorhergehenden Ansprüche, dadurch gekennzeichnet, daß man die Mischung bei 10 bis 20°C reifen läßt.

5. Verfahren nach Anspruch 4, dadurch gekennzeichnet, daß man einen Temperaturbereich von 15 bis 20°C einhält.

6. Verfahren nach einem oder mehreren der vorhergehenden Ansprüche, dadurch gekennzeichnet, daß man der Milch bis zu 45 Gew.-% Sahne zusetzt.

7. Verfahren nach Anspruch 6, dadurch gekennzeichnet, daß man der Milch bis zu 25 Gew.-% Sahne zusetzt.

8. Verfahren nach einem oder mehreren der vorhergehenden Ansprüche, dadurch gekennzeichnet, daß man der Mischung Lipase zusetzt.